# EUROPÄISCHE PATENTSCHRIFT

(11) **EP 3 321 503 B1**
(45) Veröffentlichungstag und Bekanntmachung des Hinweises auf die Patenterteilung: **22.04.2020**
(21) Anmeldenummer: 16198328.3
(22) Anmeldetag: 11.11.2016
(51) Int. Cl.: F03D 1/06, F03D 17/00, F03D 13/10

(54) **VERFAHREN ZUR PROJEKTION EINER MARKIERUNG INNERHALB EINES ROTORBLATTS EINER WINDENERGIEANLAGE**
METHOD FOR PROJECTING A MARKING WITHIN A ROTOR BLADE OF A WIND TURBINE
PROCÉDÉ DE PROJECTION D'UN MARQUAGE À L'INTÉRIEUR D'UNE PALE DE ROTOR D'UNE ÉOLIENNE

(43) Veröffentlichungstag der Anmeldung: 16.05.2018
(73) Patentinhaber: Nordex Energy GmbH, 22419 Hamburg (DE)
(72) Erfinder: Hellwig, Lutz, 17491 Greifswald (DE); Lipka, Thomas, 18055 Rostock (DE)
(74) Vertreter: Hauck Patentanwaltspartnerschaft mbB

(56) Entgegenhaltungen:
- WO-A2-2008/092461
- DE-A1-102012 104 875
- US-A1- 2014 054 476

## Beschreibung

Die Erfindung betrifft ein Verfahren zur Projektion einer Markierung innerhalb eines Rotorblatts einer Windenergieanlage.

Die Rotorblätter moderner Windenergieanlagen enthalten zunehmend aufwendige Systemtechnik. Derartige Systemtechnik umfasst beispielsweise Systeme für den Blitzschutz, Schallreduktionssysteme, Systeme zum Schutz vor Vereisung sowie Überwachungssysteme zur Überwachung der strukturellen Integrität des Rotorblatts. Insbesondere werden zunehmend sogenannte Individual-Pitch-Control-(IPC)-Systeme in den Rotorblättern verbaut, welch eine individuelle Einstellung des Pitch-Winkels des jeweiligen Rotorblatts erlauben. Solche IPC-Systeme sind vor allem dazu geeignet, auf das Rotorblatt wirkende strukturelle Lasten zu reduzieren. Dazu umfassen die IPC-Systeme üblicherweise Dehnungsmessstreifen, die an den Innenwänden des Rotorblatts angebracht werden. Über die Dehnungsmessstreifen können Biegemomente des Rotorblatts erfasst werden, die dann charakteristischen Lastfällen zugeordnet werden können, um ein strukturell optimiertes Pitch-Verhalten für jedes einzelne Rotorblatt zu ermöglichen.

Für eine zuverlässige Funktionsweise der genannten Systemtechnik kann es von Bedeutung sein, die entsprechenden Systemkomponenten in allen Rotorblättern der Windenergieanlage jeweils an den exakt gleichen Positionen anzuordnen. Dies betrifft insbesondere Sensoren zur Erfassung von Blattbiegemomenten, wie beispielsweise die erwähnten Dehnungsmesstreifen. So kann bei IPC-Systemen bereits eine geringfügige Abweichung der Einbauorte der Sensoren ein ungünstiges Pitch-Verhalten und eine ungleichmäßige Belastung der Rotorblätter zur Folge haben. Für einen bestimmten Rotorblatttyp werden die idealen Einbauorte für derartige Dehnungsmessstreifen in der Regel über die geometrische Gestalt des Rotorblatts, über strukturelle Berechnungen sowie über langwierige Testreihen ermittelt. Auch bei typgleichen Rotorblättern können sich die für eine zuverlässige Funktion des IPC-Systems optimalen Einbauorte der Dehnungssensoren unterscheiden. Dies kann beispielsweise durch Schwankungen in der Wandstärke des Laminataufbaus des Rotorblatts, unterschiedliche Klebstoffmengen sowie einer Abweichung der Klebepositionen von Unterbaugruppen des Rotorblatts begründet sein.

Ein Verfahren zur wiederholgenauen Installation von Sensoren in Rotorblättern ist aus der Druckschrift EP 2 855 930 B1 bekannt. Hierbei werden über einen mit einem Blattflansch verbundenen Linienlaser zwei senkrecht zueinander stehende Lichtfächer in den Innenraum eines Rotorblatts geworfen. So wird eine Umfangsposition im Rotorblattinnenraum angezeigt. Die von dem Linienlaser ausgehenden Lichtfächer müssen hierbei ausgehend von dem Blattflansch eine Bodenplatte mit einer zentralen Öffnung passieren. Hierdurch wird der Öffnungswinkel der Lichtfächer erheblich eingeschränkt, was dazu führt, dass die Lichtfächer erst in einer relativ großen Entfernung vom Blattflansch auf die Innenwand des Rotorblatts auftreffen. Folglich können nur Einbauorte markiert werden, die relativ weit vom Blattflansch entfernt liegen. Gerade bei den Dehnungssensoren für IPC-Systeme ist jedoch häufig eine Anordnung in der Nähe des Blattflansches erwünscht.

Der Erfindung liegt daher die Aufgabe zugrunde, ein Verfahren zur wiederholgenauen Positionsmarkierung innerhalb eines Rotorblatts zur Verfügung zu stellen, dass flexibler einsetzbar ist.

Die Erfindung löst die Aufgabe durch das Verfahren mit den Merkmalen des Anspruchs 1. Vorteilhafte Ausgestaltungen sind Gegenstand der Unteransprüche.

Das Verfahren dient der Projektion einer Markierung innerhalb eines Rotorblatts einer Windenergieanlage, wobei das Rotorblatt eine Rotorblattlängsachse, eine Rotorblattinnenfläche, einen Blattanschluss zur Verbindung mit einer Rotornarbe und eine Bodenplatte, die im Wesentlichen senkrecht zu der Rotorblattlängsachse angeordnet ist, aufweist und die folgenden Schritte umfasst:
- Kennzeichnen eines Schnittpunkts der Rotorblattlängsachse mit der Bodenplatte,
- Montieren einer Projektionseinrichtung an der Bodenplatte und Ausrichten der Projektionseinrichtung relativ zu der Rotorblattlängsachse,
- Projizieren einer Markierung an die Rotorblattinnenfläche mit der Projektionseinrichtung.

Erfindungsgemäß wird demnach ein Schnittpunkt der Rotorblattlängsachse mit der Bodenplatte des Rotorblatts gekennzeichnet. Diese Kennzeichnung kann insbesondere auf der Bodenplatte ausgeführt werden, beispielsweise kann an dem Schnittpunkt auf der Bodenplatte eine Punktmarkierung aufgebracht werden. Die Rotorblattlängsachse ist als eine zentral über die gesamte Länge des Rotorblatts verlaufende Achse zu verstehen. Sie kann als Symmetrieachse des Blattanschlusses definiert werden. Ist ein Pitch-System vorgesehen, so stellt die Rotorblattlängsachse auch die Pitch-Achse dar, um welche das Rotorblatt gedreht werden kann. Die Bodenplatte des Rotorblatts ist hierbei im Wesentlichen senkrecht zur Rotorblattlängsachse, also entlang des Rotorblattquerschnitts, angeordnet. Die Bodenplatte kann insbesondere in der Nähe des Blattanschlusses angeordnet sein, wo das Rotorblatt einen annähernd kreisförmigen Querschnitt aufweist. Dieser geht zur Blattspitze hin in ein aerodynamisches Profil des Rotorblatts über. Der Blattanschluss kann als Ausgangspunkt für eine Kennzeichnung des Schnittpunkts der Rotorblattlängsachse mit der Bodenplatte dienen. Ausgehend von dem Blattanschluss kann dann der Schnittpunkt der Rotorblattlängsachse mit der Bodenplatte ermittelt werden. Anschließend kann der Punkt, an dem die Rotorblattlängsachse die Bodenplatte schneidet, gekennzeichnet werden.

Erfindungsgemäß wird eine Projektionseinrichtung an der Bodenplatte montiert und relativ zur Rotorblattlängsachse ausgerichtet. Die Projektionseinrichtung kann beispielsweise mit der Bodenplatte verklebt oder verschraubt werden. Auch kann die Projektionseinrichtung auf eine beliebige andere Art und Weise an der Bodenplatte befestigt werden, zum Beispiel mit einer Klemmbefestigung. Die Projektionseinrichtung kann insbesondere an dem gekennzeichneten Schnittpunkt der Rotorblattlängsachse mit der Bodenplatte angeordnet werden. Weiterhin wird die montierte Projektionseinrichtung relativ zu der Rotorblattlängsachse ausgerichtet. Wenn die Projektionseinrichtung an dem gekennzeichneten Schnittpunkt mit der Bodenplatte verbunden ist, kann eine optische Achse der Projektionseinrichtung insbesondere entlang der Rotorblattlängsachse ausgerichtet werden.

Weiterhin wird erfindungsgemäß mit der Projektionseinrichtung eine Markierung an die Rotorblattinnenfläche projiziert. Auch können mehrere Markierungen, beispielsweise Linien oder Punkte, durch die Projektionseinrichtung projiziert werden. Die Projektionseinrichtung kann hierfür beispielsweise einen oder mehrere Laser umfassen. An den projizierten Markierungen können unterschiedliche Systeme oder Sensoren, wie beispielsweise Dehnungsmessstreifen, angebracht werden.

Durch das erfindungsgemäße Verfahren kann die Projektionseinrichtung für jedes Rotorblatt zuverlässig in der gleichen Weise montiert werden, was wiederum zu einer wiederholgenauen Projektion von Markierungen an die jeweilige Rotorblattinnenfläche führt. Indem ein Schnittpunkt der Rotorblattlängsachse mit der Bodenplatte gekennzeichnet und die Projektionseinrichtung relativ zu der Rotorblattlängsachse, und somit auch zu dem gekennzeichneten Schnittpunkt, ausgerichtet wird, kann die Projektionseinrichtung direkt an der Bodenplatte montiert werden. Folglich kann die Projektionseinrichtung auch Markierungen in unmittelbarer Nähe der Bodenplatte und somit in der Nähe des Blattanschlusses projizieren, was bei dem in der Druckschrift EP 2 855 930 B1 offenbarten Verfahren nicht möglich ist. In vorteilhafter Weise können so auch Sensoren, wie beispielsweise Dehnungsmessstreifen, nahe dem Blattanschluss angebracht werden, was insbesondere für IPC-Systeme von Bedeutung ist. Durch die Anbringung der Projektionseinrichtung an der Bodenplatte ist das erfindungsgemäße Verfahren zudem unabhängig von der Ausgestaltung der Bodenplatte, insbesondere muss die Bodenplatte keine mittige Öffnung aufweisen. Stattdessen können an der Bodenplatte beispielweise außermittig positionierte Bodenluken vorgesehen sein.

In einer Ausgestaltung wird zum Kennzeichnen des Schnittpunkts der Rotorblattlängsachse mit der Bodenplatte eine Kennzeichnungseinheit verwendet, die relativ zu dem Blattanschluss ausgerichtet wird. Die Kennzeichnungseinheit kann hierbei mit dem Blattanschluss verbunden werden. Insbesondere kann die Kennzeichnungseinheit an mindestens einer Querbohrung und/oder an mindestens einer Längsbohrung des Blattanschlusses befestigt werden. Auch ist es möglich, die Kennzeichnungseinheit an in den Querbohrungen des Blattanschlusses befindlichen Querbolzen oder an in den Längsbohrungen angeordneten Längsbolzen zu befestigen, die zur Verbindung des Blattanschlusses mit einer Rotornabe dienen. Somit kann das erfindungsgemäße Verfahren sowohl im unmontierten wie auch im montierten Zustand der Rotorblätter ausgeführt werden. Die Kennzeichnungseinheit kann relativ zu dem Blattanschluss ausgerichtet werden, derart dass sie eine Kennzeichnung des Schnittpunkts der Rotorblattlängsachse mit der Bodenplatte ermöglicht. Beispielsweise kann die Kennzeichnungseinheit die Rotorblattlängsachse auf die Bodenplatte projizieren und so den besagten Schnittpunkt als einen Punkt auf der Bodenplatte kennzeichnen. Der Punkt kann dann beispielsweise mit einem Stift auf der Bodenplatte markiert werden. Eine Ausrichtung der Kennzeichnungseinheit relativ zu dem Blattanschluss erlaubt eine besonders einfache Ermittlung des Schnittpunkts der Rotorblattlängsachse mit der Bodenplatte, wie oben erläutert. Auch kann die Kennzeichnungseinheit zur Verbindung mit dem Blattanschluss ausgebildet sein. Dies ermöglicht eine einfache Ausrichtung der Kennzeichnungseinheit relativ zu dem Blattanschluss.

Gemäß einer weiteren Ausgestaltung kann die Kennzeichnungseinheit eine sich über einen Radius oder einen Durchmesser des Blattanschlusses erstreckende Haltestange umfassen, die an dem Blattanschluss befestigt wird. Die Haltestange kann in einer weiteren Ausgestaltung an Querbohrungen, Querbolzen, Längsbohrungen oder Längsbolzen des Blattanschlusses befestigt werden. Sollte das Rotorblatt noch nicht an der Rotornabe montiert worden sein, so kann die Haltestange mit den Querbohrungen oder Längsbohrungen des Blattanschlusses verbunden werden. Sollte das Rotorblatt bereits an der Rotornabe montiert sein, kann eine Befestigung der Haltestange an den Querbolzen oder Längsbolzen erfolgen, wobei die Querbolzen in die Querbohrungen und/oder die Längsbolzen in die Längsbohrungen des Blattanschlusses eingesetzt sein können. Die Haltestange kann insbesondere mit zwei oder mehr Querbohrungen, Querbolzen, Längsbohrungen oder Längsbolzen des Blattanschlusses verbunden werden. Sofern sich die Haltestange entlang des Durchmessers des Blattanschlusses erstreckt, können beide Enden der Haltestange jeweils mit dem Blattanschluss in beschriebener Weise verbunden sein. Sollte sich die Haltestange nur über den Radius des Blattanschlusses erstrecken, kann insbesondere nur ein Ende der Haltestange mit dem Blattanschluss in beschriebener Weise verbunden sein. Gemäß einer weiteren Ausgestaltung kann die Haltestange eine Magnetbefestigung zur Befestigung an dem Blattanschluss aufweisen. Insbesondere kann die Magnetbefestigung mit in die Querbohrungen eingesetzten Querbolzen und/oder mit in die Längsbohrungen eingesetzten Längsbolzen zusammenwirken. Über die Haltestange kann die Kennzeichnungseinheit in einfacher und reversibler Weise mit dem Blattanschluss verbunden werden. Gerade bei einer magnetischen Verbindung mittels der Magnetbefestigung geht eine Installation der Kennzeichnungseinheit somit schnell vonstatten. Die Haltestange kann zudem auch in der Länge verstellbar sein, um eine Verwendung für Rotorblätter unterschiedlichen Durchmessers zu ermöglichen.

In einer weiteren Ausgestaltung weist die Kennzeichnungseinheit einen an der Haltestange angeordneten Linienlaser auf, der eine Laserlinie entlang der Rotorblattlängsachse auf die Bodenplatte projiziert. Sollte sich die Kennzeichnungseinheit entlang des Durchmessers des Blattanschlusses erstrecken, so kann der Linienlaser insbesondere mittig an der Haltestange angeordnet sein. Mittig auf der Haltestange, also gerade bei halbem Durchmesser des Blattanschlusses, kann dabei der Linienlaser positioniert sein. Da der Blattanschluss in der Regel einen kreisförmigen Querschnitt aufweist, ist der Linienlaser somit direkt auf der Rotorblattlängsachse angeordnet. Sollte sich die Kennzeichnungseinheit über einen Radius des Blattanschlusses erstrecken, so kann der Linienlaser insbesondere an einem auf der Rotorblattlängsachse liegenden Ende der Haltestange angeordnet sein. Entlang der Rotorblattlängsachse kann der Linienlaser dann ausgehend von dem Blattanschluss eine Laserlinie auf die Bodenplatte projizieren und so einen Schnittpunkt der Rotorblattlängsachse mit der Bodenplatte kennzeichnen. Dies ermöglicht eine Übertragung einer einfach festzustellenden Referenzposition von dem Blattanschluss auf die Bodenplatte. Eine Ausrichtung des Linienlasers exakt zu der Rotorblattlängsachse kann beispielsweise erfolgen, in dem die kürzeste Distanz zwischen der Kennzeichnungseinheit und der Bodenplatte ermittelt wird. Die entlang dieser Strecke projizierte Laserlinie verläuft dann auf der Rotorblattlängsachse. Eine derartige Entfernungsmessung kann beispielsweise durch den Linienlaser sowie eine zugehörige Detektionseinheit erfolgen, die das von der Bodenplatte zurückgeworfene Laserlicht empfängt und aus der Laufzeit die Entfernung bestimmt. Die Haltestange kann zudem auch in der Länge verstellbar sein, idealerweise derart, dass der Linienlaser immer auf der Rotorblattlängsachse positioniert ist.

In einer Ausgestaltung wird zum Montieren der Projektionseinrichtung eine Durchgangsbohrung in die Bodenplatte an dem gekennzeichneten Schnittpunkt gebohrt, wobei die Projektionseinrichtung im Bereich der Durchgangsbohrung an einer Innenseite der Bodenplatte angeordnet wird. Die Projektionseinrichtung kann dabei insbesondere an der Durchgangsbohrung befestigt werden. Sollte eine Kennzeichnungseinheit vorgesehen sein, so kann diese den Schnittpunkt der Rotorblattlängsachse mit der Bodenplatte auf einer Außenseite der Bodenplatte kennzeichnen. Die Außenseite der Bodenplatte ist dabei dem Blattanschluss zugewandt, während die Innenseite der Bodenplatte dem Rotorblattinnenraum zugewandt ist. Durch die Kennzeichnungseinheit kann dann mittels des Linienlasers in der beschriebenen Art und Weise der Schnittpunkt der Rotorblattlängsachse und der Bodenplatte auf der Außenseite der Bodenplatte gekennzeichnet werden. Ausgehend von diesem gekennzeichneten Punkt kann eine Durchgangsbohrung durch die Bodenplatte gebohrt werden und schließlich auf der anderen Seite, also der Innenseite der Bodenplatte, die Projektionseinrichtung angeordnet werden. Die Projektionseinrichtung kann mit Hilfe der Durchgangsbohrung, insbesondere mit Hilfe der projizierten Laserlinie, relativ zu der Rotorblattlängsachse ausgerichtet werden. Dies ermöglicht eine zuverlässige Positionierung der Projektionseinrichtung auf Bodenplatte und Rotorblattlängsachse.

In einer weiteren Ausgestaltung wird zum Ausrichten der Projektionseinreichung die Rotorblattlängsachse auf einer Innenfläche des Rotorblatts gekennzeichnet. Die Rotorblattlängsachse kann dabei grundsätzlich auf einer beliebigen Fläche im Rotorblattinnenraum gekennzeichnet werden. Anhand dieser Kennzeichnung im Rotorblattinnenraum kann die Projektionseinrichtung besonders einfach relativ zu der Rotorblattlängsachse ausgerichtet werden. In einer weiteren Ausgestaltung kann eine derartige Kennzeichnung durch den Linienlaser der Kennzeichnungseinheit erfolgen, wobei dieser eine Laserlinie entlang der Rotorblattlängsachse durch die bereits angefertigte Durchgangsbohrung der Bodenplatte projizieren kann. Nach dieser Ausgestaltung kann also, nachdem die Kennzeichnungseinheit den Schnittpunkt der Rotorblattlängsachse mit der Bodenplatte gekennzeichnet hat und eine Durchgangsbohrung an dieser Stelle durch die Bodenplatte angefertigt wurde, die Kennzeichnungseinheit mittels des Linienlasers durch die Durchgangsbohrung hindurch in den Innenraum des Rotorblatts leuchten. Der auf der Innenfläche auftreffende Laserpunkt kann beispielsweise mit einem Stift markiert werden. Anschließend kann auf der Innenseite der Bodenplatte die Projektionseinrichtung mit der Durchgangsbohrung verbunden und somit an der Bodenplatte montiert werden. Eine Ausrichtung der Projektionseinrichtung kann dann über die Kennzeichnung der Rotorblattlängsachse auf der Innenfläche des Rotorblatts erfolgen. Somit wird die Rotorblattlängsachse in zuverlässiger Weise auch im Rotorblattinnenraum sichtbar gemacht. Gemäß einer Ausgestaltung wird die Rotorblattlängsachse auf einer Stirnfläche eines entlang der Rotorblattlängsachse verlaufenden Stegs gekennzeichnet. Die Innenfläche kann dabei durch die Stirnfläche des Stegs gebildet sein. Entlang der Rotorblattlängsachse verlaufende Stege sind häufig in modernen Rotorblättern zur Erhöhung der Blattstabilität vorhanden.

Erfindungsgemäß umfasst die Projektionseinrichtung einen Rotationslaser, der eine erste Laserfläche erzeugt, die im Wesentlichen senkrecht zu der Rotorblattlängsachse verläuft. Insbesondere kann die Laserfläche des Rotationslasers eine über den gesamten Innenumfang des Rotorblatts verlaufende Linie erzeugen. Aufgrund des erfindungsgemäßen Verfahrens wird diese Linie dabei für jedes Rotorblatt an exakt der gleichen Radiusposition erzeugt. Entlang dieser Umfangslinie können folglich die benötigten Sensoren, wie beispielsweise Dehnungsmessstreifen, montiert werden.

Erfindungsgemäß umfasst die Projektionseinrichtung zudem einen Kreuzlaser, der mindestens eine zweite Laserfläche und eine dritte Laserfläche erzeugt, die parallel zur Rotorblattlängsachse verlaufen und die erste Laserfläche des Rotationslasers kreuzen, wobei die Kreuzungspunkte der ersten Laserfläche mit der zweiten Laserfläche und die Kreuzungspunkte der ersten Laserfläche mit der dritten Laserfläche die projizierten Markierungen bilden. Die durch den Kreuzlaser erzeugten zweiten und dritten Laserflächen erzeugen hierbei Linien an der Rotorblattinnenfläche, die im Wesentlichen parallel zur Rotorblattlängsachse verlaufen. Die Projektionseinrichtung kann also einen Rotationslaser sowie einen Kreuzlaser umfassen, deren projizierte Laserflächen sich kreuzen. Durch die Kombination der beiden Laser ist es möglich, die exakten Positionen der Markierungen auch in Bereichen des Rotorblatts zu erstellen, in denen der kreisförmige Blattanschlussbereich in einen Bereich mit einem aerodynamischen Profil übergeht. Der Kreuzlaser wird dabei so eingestellt, dass die von ihm an der Rotorblattinnenwand erzeugten Linien die von dem Rotationslaser erzeugte Linie kreuzen. An den Kreuzungspunkten der ersten Laserfläche, also der durch den Rotationslaser erzeugten Laserfläche, mit der zweiten bzw. dritten Laserfläche, also den durch den Kreuzlaser erzeugten Laserflächen, werden auf der Rotorblattinnenfläche exakte Markierungen gebildet. Dort, wo die erste Laserfläche und die zweite Laserfläche sich auf der Rotorblattinnenfläche kreuzen, werden entsprechend zwei Markierungspunkte erzeugt. Ebenso werden dort, wo die erste Laserfläche und die dritte Laserfläche sich kreuzen an der Rotorblattinnenfläche weitere zwei Kreuzungspunkte erzeugt. Grundsätzlich kann der Kreuzlaser auch mehr als zwei Laserflächen erzeugen. An den entsprechenden Kreuzungspunkten mit der durch den Rotationslaser erzeugten ersten Laserfläche entstehen somit weitere Markierungen auf der Rotorblattinnenfläche. Die zweite und dritte Laserfläche können hierbei im Wesentlichen senkrecht zueinander verlaufen. Es ist jedoch auch möglich, dass die zweite Laserfläche und die dritte Laserfläche in einem von 90° abweichenden Winkel zueinander verlaufen.

In einer weiteren Ausgestaltung weist die Projektionseinrichtung ein Halteelement auf, an dem der Kreuzlaser und der Rotationslaser im montierten Zustand der Projektionseinrichtung entlang der Rotationslängsachse versetzt zueinander angeordnet sind. Der Kreuzlaser wie auch der Rotationslaser können an dem Halteelement verschiebbar sein. Somit können die projizierten Laserflächen und damit die auf die Rotorblattinnenfläche projizierten Linien verstellt werden. Die Projektionsrichtung kann im montierten Zustand um die Rotorblattlängsachse winkelverstellbar sein. Somit kann die Projektionseinrichtung einschließlich des auf dem Halteelement angeordneten Kreuzlasers um die Rotorblattlängsachse gedreht werden. Dies ermöglicht eine Verschiebung der Kreuzungspunkte der Laserflächen entlang dem Innenumfang des Rotorblatts.

Die Erfindung wird im Folgenden anhand von Figuren näher erläutert. Soweit nichts anderes angegeben ist, bezeichnen gleiche Bezugszeichen gleiche Gegenstände. Es zeigen:
- Fig. 1: einen nabenseitigen Abschnitt eines Rotorblatts in einer perspektivischen Ansicht,
- Fig. 2: zwei Detaillausschnitte des Rotorblatts aus Fig. 1,
- Fig. 3: eine vereinfachte, geschnittene Ansicht eines Rotorblatts,
- Fig. 4: eine schematische, perspektivische Ansicht einiger Elemente des Rotorblatts aus Fig. 1,
- Fig. 5: eine weitere vereinfachte, geschnittene Ansicht eines Rotorblatts,
- Fig. 6: eine Projektionseinrichtung, und
- Fig. 7: eine alternative Ausführung der Kennzeichnungseinheit aus Fig. 1.

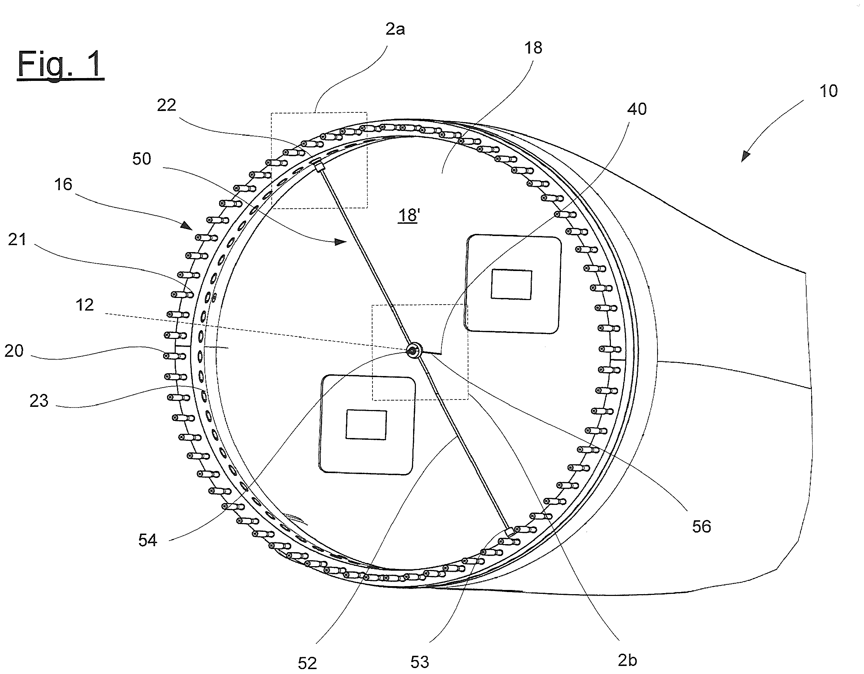

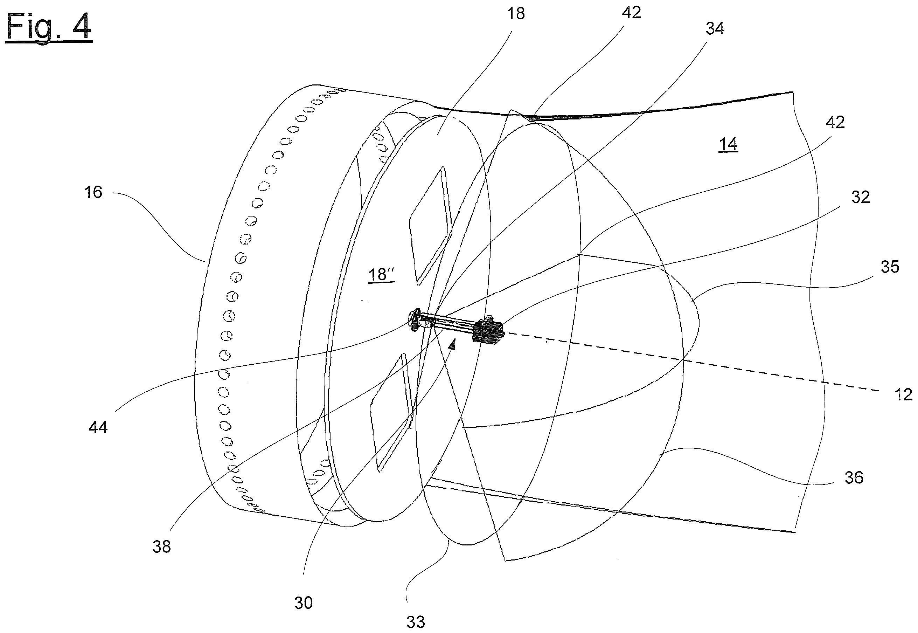

In Fig. 1 ist ausschnittsweise ein Rotorblatt 10 gezeigt, das eine Rotorblattlängsachse 12, einen Blattanschluss 16 sowie eine Bodenplatte 18 aufweist. Das Rotorblatt 10 weist zudem eine Rotorblattinnenfläche 14 auf, die in Fig. 4 erkennbar ist. Über den Blattanschluss 16 ist das Rotorblatt 10 mit einer nicht dargestellten Rotornabe verbindbar. Hierfür weist der Blattanschluss 16 Längsbohrungen 21 und Querbohrungen 23 auf. Üblicherweise werden dabei zur Befestigung Längsbolzen 20 in die Längsbohrungen 21 eingeführt und in Querbolzen 22, die in die Querbohrungen 23 des Blattanschlusses 16 eingeführt werden, verankert. Weiterhin ist in Fig. 1 eine Kennzeichnungseinheit 50 zu erkennen, die eine Haltestange 52, zwei Magnetbefestigungen 53 und einen Linienlaser 54 aufweist. Die Haltestange 52 erstreckt sich entlang eines Durchmessers des Blattanschlusses 16 und ist an ihren Enden über die Magnetbefestigungen 53 magnetisch mit den in den Querbohrungen 23 sitzenden Querbolzen 22 verbunden.

Der Querschnitt des Blattanschlusses 16 ist kreisförmig, so dass die Rotorblattlängsachse 12 die Querschnittsfläche des Blattanschlusses 16 genau mittig durchstößt. Die Rotorblattlängsachse 12 steht senkrecht auf der Querschnittsfläche des Blattanschlusses 16. Da der Linienlaser 54 genau in der Mitte der Haltestange 52, also auf halbem Durchmesser des Blattanschlusses 16, angeordnet ist, befindet sich der Linienlaser 54 gerade auf dem Schnittpunkt der Rotorblattlängsachse 12 mit der Querschnittsfläche des Blattanschlusses 16. Der Linienlaser 54 projiziert eine Laserlinie 56 auf die Außenseite 18' der Bodenplatte 18. Indem diese Laserlinie 56 auf der kürzesten Distanz zwischen Linienlaser 54 und der Außenseite 18' der Bodenplatte 18 projiziert wird, verläuft die Laserlinie 56 exakt auf der Rotorblattlängsachse 12. Zur Abstandsmessung zwischen Linienlaser 54 und der Außenseite 18' der Bodenplatte 18 kann beispielsweise eine Laufzeitmessung erfolgen. Der Schnittpunkt 40 der Rotorblattlängsachse 12 mit der Bodenplatte 18 kann beispielsweise mit einem Stift oder ähnlichem markiert werden.

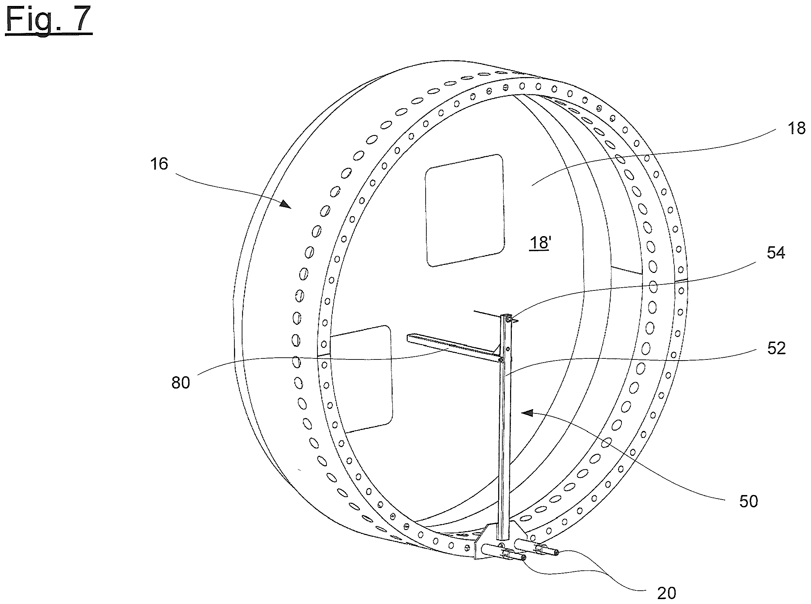

Eine alternative Ausführungsform der Kennzeichnungseinheit 50 ist in Fig. 7 dargestellt. Die Haltestange 52 ist einseitig an einem ersten Ende mit dem Blattanschluss 16 über zwei Längsbolzen 20 verbunden. Sie weist einen Stützarm 80 auf, mit dem sie sich auf der Außenseite der Bodenplatte 18' abstützt, so dass sie parallel zur Bodenplatte 18 ausgerichtet ist. Die Länge der Haltestange entspricht dem Radius des Blattanschlusses 16, so dass der am zweiten Ende der Haltestange 52 montierte Linienlaser 54 sich genau über dem Mittelpunkt der Bodenplatte 18 befindet.

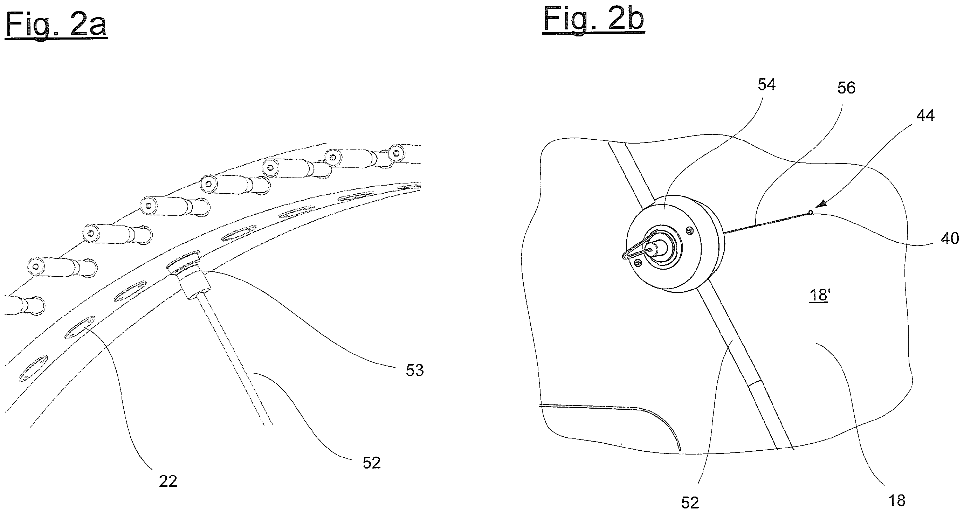

In den Figuren 2a und 2b sind die in Fig. 1 gekennzeichneten Ausschnitte im Detail dargestellt. In Fig. 2a ist zu erkennen, wie eine der Magnetbefestigungen 53 der Haltestange 52 der Kennzeichnungseinheit 50 mit einem Querbolzen 22 des Blattanschlusses 16 verbunden ist.

In Fig. 2b ist im Detail zu erkennen, dass der Linienlaser 54 eine Laserlinie 56 erzeugt, die auf der Außenseite der Bodenplatte 18' den Schnittpunkt der Rotorblattlängsachse 12 mit der Bodenplatte 18 markiert. Exakt an diesem Schnittpunkt 40 wird anschließend eine Durchgangsbohrung 44 in die Bodenplatte 18 gebohrt.

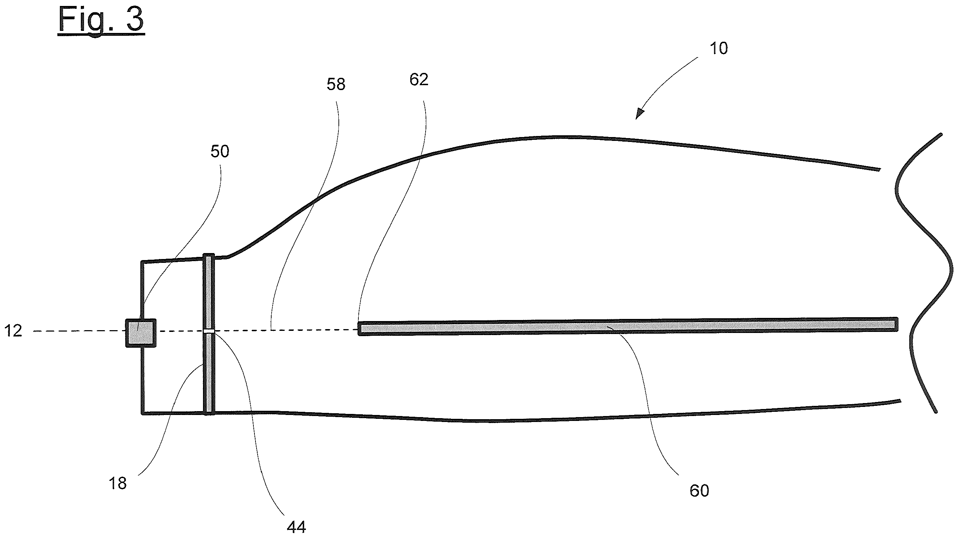

Fig. 3 zeigt einen Ausschnitt des Rotorblatts 10 im Querschnitt. Es ist eine Laserlinie 58 zu erkennen, die von dem Linienlaser 54 der Kennzeichnungseinheit 50 ausgesandt wird. Hierbei wurde der Schnittpunkt 40 der Rotorblattlängsachse 12 mit der Bodenplatte 18 bereits gekennzeichnet und eine Durchgangsbohrung 44 an eben dieser Stelle gebohrt. Die Laserlinie 58 durchtritt somit die Bodenplatte 18 an der Durchgangsbohrung 44 und trifft auf eine Innenfläche 62 des Rotorblatts 10. In dem vorliegenden Beispiel ist diese Innenfläche 62 eine der Bodenplatte 18 zugewandte Stirnfläche eines Stegs 60. Der Steg 60 verläuft entlang der Rotorblattlängsachse 12 und gibt dem Rotorblatt 10 Stabilität. Durch die Kennzeichnungseinheit 50 wird so die Rotorblattlängsachse 12 in den Innenraum des Rotorblatts 10 projiziert. Dort wo die Laserlinie 58 auf die Innenfläche 62 auftrifft, wird eine weitere Kennzeichnung beispielsweise durch einen Stift angebracht. Anschließend kann die Kennzeichnungseinheit 50 demontiert werden.

In Fig. 4 ist eine Innenansicht des Rotorblatts 10 zu sehen, wobei das Rotorblatt teilweise aufgeschnitten dargestellt ist. Die Projektionseinrichtung 30 ist dabei über die Durchgangsbohrung 44 mit einer Innenseite 18" der Bodenplatte 18 verbunden. Die Projektionseinrichtung 30 weist einen Rotationslaser 32 und einen Kreuzlaser 34 auf, die an einem Haltelement 38 angeordnet sind. Der Rotationslaser 32 sowie der Kreuzlaser 34 sind versetzt an dem Halteelement 38 angeordnet, wobei der Kreuzlaser 34 näher an der Bodenplatte 18 befindlich ist, als der Rotationslaser 32. Aufgrund der Anbringung der Projektionseinrichtung 30 an der Durchgangsbohrung 44 der Bodenplatte 18 befindet sich zumindest der Fußpunkt der Projektionseinrichtung 30 auf der Rotorblattlängsachse 12. Anhand der zuvor durch die Kennzeichnungseinheit 50 an der Innenfläche 62 (nicht dargestellt) gekennzeichneten Position kann die Projektionseinrichtung 30 nun vollständig entlang der Rotorblattlängsachse 12 ausgerichtet werden. Hierzu kann der Rotationslaser einen weiteren Laserstrahl in Richtung der Rotorblattlängsachse 12 aussenden, wobei bei einer Überdeckung des durch diesen Laserstrahl erzeugten Punkts mit der Kennzeichnung auf der Innenfläche 62 die Projektionseinrichtung entlang der Rotorblattlängsachse 12 ausgerichtet ist.

Weiterhin ist in Fig. 4 zu erkennen, dass der Rotationslaser 32 eine erste Laserfläche 33 erzeugt, die auf der Rotorblattinnenfläche 14 einen umfänglich verlaufenden Kreis hinterlässt. Der Kreuzlaser 34 erzeugt hierbei eine zweite Laserfläche 35 und eine dritte Laserfläche 36. Alle drei Laserflächen 33, 35, 36 stehen in diesem Ausführungsbeispiel senkrecht aufeinander. Die erste Laserfläche 33 erzeugt mit der zweiten Laserfläche 35 und mit der dritten Laserfläche 36 Markierungen 42 in Form von Kreuzungspunkten auf der Rotorblattinnenfläche 14. Der Kreuzlaser 34 und der Rotationslaser 32 sind versetzt zueinander angeordnet, um eine Kreuzung der Laserflächen 33, 35, 36 trotz des Öffnungswinkels der zweiten und dritten Laserflächen 35, 36 zu ermöglichen. Auf diese Weise projiziert die Projektionseinrichtung 30 Markierungen 42 an die Rotorblattinnenflächen 14, die für jedes Rotorblatt exakt die gleichen Positionen betreffen und so für jedes Rotorblatt eine exakte Anordnung von Sensoren wie beispielsweise Dehnungsmessstreifen ermöglicht.

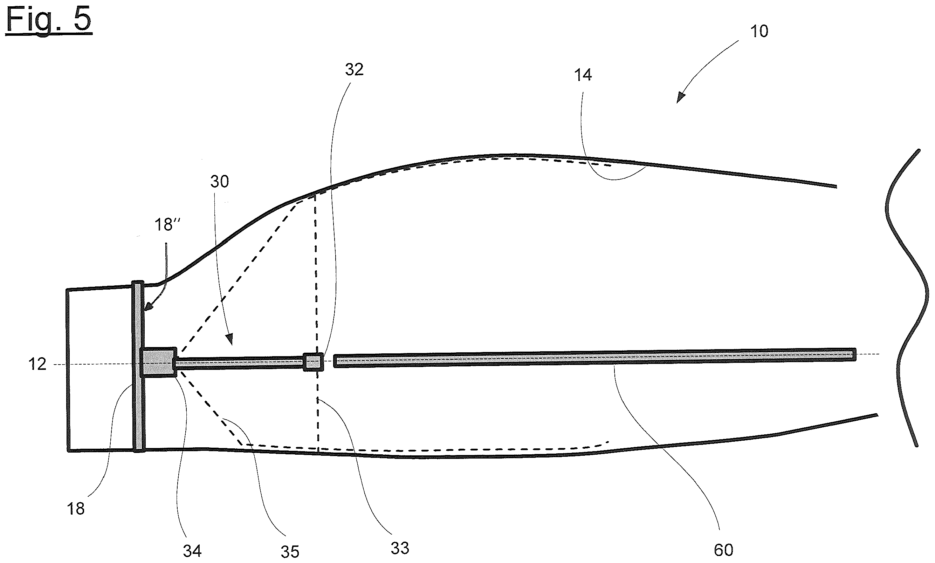

Fig. 5 zeigt das in Fig. 4 dargestellte Prinzip der erfinderischen Lösung noch einmal in einer vereinfachten schematischen Darstellung. Fig. 5 zeigt den gleichen Ausschnitt des Rotorblatts 10 im Querschnitt wie in Fig. 3. Die Projektionseinrichtung 30 ist an der Innenseite 18" der Bodenplatte 18 montiert und in Bezug zur Rotorblattlängsachse 12 ausgerichtet. Der Rotationslaser 32 erzeugt eine erste Laserfläche 33, die auf der Rotorblattinnenfläche 14 einen umfänglich verlaufenden Kreis hinterlässt. Der Kreuzlaser 34 erzeugt eine zweite Laserfläche 35 und eine dritte Laserfläche 36 (nicht dargestellt). In der schematischen Darstellung ist gut zu erkennen, dass der Kreuzlaser 34 aufgrund des aerodynamischen Profils an unterschiedlichen Radiuspositionen auf die Rotorblattinnenfläche trifft. Durch die Kombination mit dem Rotationslaser 32 haben die Markierungen 42 alle den gleichen Abstand zur Rotorblattwurzel.

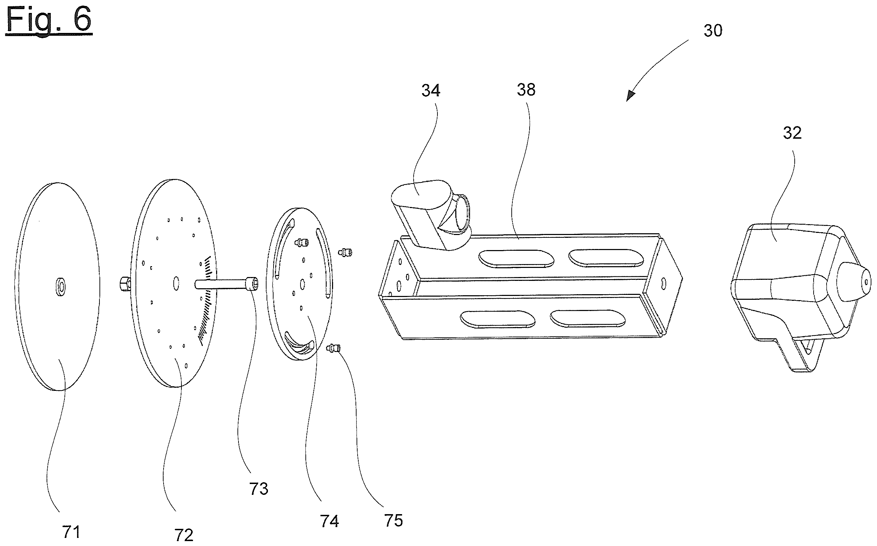

Fig. 6 zeigt die Projektionseinrichtung 30 in einer Explosionsdarstellung. Erkennbar ist hierbei das Halteelement 38, an dem der Rotationslaser 32 sowie der Kreuzlaser 34 befestigt werden. Weiterhin ist eine erste Befestigungsplatte 71 erkennbar, welche an der Außenseite 18' der Bodenplatte 18 angebracht wird und eine zweite Befestigungsplatte 72, die an der Innenseite 18" der Bodenplatte 18 angebracht wird. Über die Zylinderschraube 73, welche durch die Durchgangsbohrung 44 geführt wird, werden die Befestigungsplatten 71, 72 mit der Bodenplatte 18 verbunden. Auf der Befestigungsplatte 72 wird eine Winkeljustierplatte 74 aufgesetzt, die über Zylinderschrauben 75 fixiert werden kann. Das Halteelement 38 ist wiederum mit der Winkeljustierplatte 74 verbunden. Über die Winkeljustierplatte 74 können das Halteelement 38 und somit der Rotationslaser 32 und der Kreuzlaser 34 im montierten Zustand der Projektionsvorrichtung 30 um die Rotorblattlängsachse 12 gedreht werden.

### Liste der verwendeten Bezugszeichen

- 10: Rotorblatt
- 12: Rotorblattlängsachse
- 14: Rotorblattinnenfläche
- 16: Blattanschluss
- 18: Bodenplatte
- 18': Außenseite der Bodenplatte
- 18": Innenseite der Bodenplatte
- 20: Längsbolzen
- 21: Längsbohrungen
- 22: Querbolzen
- 23: Querbohrungen
- 30: Projektionseinrichtung
- 32: Rotationslaser
- 33: erste Laserfläche
- 34: Kreuzlaser
- 35: zweite Laserfläche
- 36: dritte Laserfläche
- 38: Halteelement
- 40: Schnittpunkt der Rotorblattlängsachse mit der Bodenplatte
- 42: Markierungen auf der Rotorblattinnenfläche
- 44: Durchgangsbohrung
- 50: Kennzeichnungseinheit
- 52: Haltestange
- 53: Magnetbefestigungen
- 54: Linienlaser
- 56: Laserlinie
- 58: Laserlinie
- 60: Steg
- 62: Innenfläche
- 71: erste Befestigungsplatte
- 72: zweite Befestigungsplatte
- 73: Zylinderschraube
- 74: Winkeljustierplatte
- 75: Zylinderschrauben
- 80: Stützarm

## Patentansprüche

1. Verfahren zur Projektion einer Markierung innerhalb eines Rotorblatts (10) einer Windenergieanlage, wobei das Rotorblatt (10) eine Rotorblattlängsachse (12), eine Rotorblattinnenfläche (14), einen Blattanschluss (16) zur Verbindung mit einer Rotornabe und eine Bodenplatte (18), die im Wesentlichen senkrecht zur Rotorblattlängsachse (12) angeordnet ist, aufweist, **gekennzeichnet durch** die Schritte:
- Kennzeichnen eines Schnittpunkts (40) der Rotorblattlängsachse (12) mit der Bodenplatte (18),
- Montieren einer Projektionseinrichtung (30) an der Bodenplatte (18) und Ausrichten der Projektionseinrichtung (30) relativ zu der Rotorblattlängsachse (12),
- Projizieren einer Markierung (42) an die Rotorblattinnenfläche (14) mit der Projektionseinrichtung (30), wobei
- die Projektionseinrichtung (30) einen Rotationslaser (32) umfasst, wobei der Rotationslaser (32) eine erste Laserfläche (33) erzeugt, die im Wesentlichen senkrecht zu der Rotorblattlängsachse (12) verläuft, und wobei
- die Projektionseinrichtung (30) weiterhin einen Kreuzlaser (34) umfasst, wobei der Kreuzlaser (34) mindestens eine zweite Laserfläche (35) und eine dritte Laserfläche (36) erzeugt, die parallel zur Rotorblattlängsachse (12) verlaufen und die erste Laserfläche (33) des Rotationslasers (32) kreuzen, wobei die Kreuzungspunkte der ersten Laserfläche (33) mit der zweiten Laserfläche (35) und die Kreuzungspunkte der ersten Laserfläche (33) mit der dritten Laserfläche (36) die projizierten Markierungen (42) bilden.

2. Verfahren nach Anspruch 1, **dadurch gekennzeichnet, dass** zum Kennzeichnen des Schnittpunkts (40) der Rotorblattlängsachse (12) mit der Bodenplatte (18) eine Kennzeichnungseinheit (50) verwendet wird, die relativ zu dem Blattanschluss (16) ausgerichtet wird.

3. Verfahren nach Anspruch 2, **dadurch gekennzeichnet, dass** die Kennzeichnungseinheit (50) eine sich über einen Radius oder einen Durchmesser des Blattanschlusses (16) erstreckende Haltestange (52) umfasst, die an dem Blattanschluss (16) befestigt wird.

4. Verfahren nach Anspruch 3, **dadurch gekennzeichnet, dass** die Haltestange (52) an Querbohrungen (23), Querbolzen (22), Längsbohrungen (21) oder Längsbolzen (20) des Blattanschlusses (16) befestigt wird.

5. Verfahren nach Anspruch 4, **dadurch gekennzeichnet, dass** die Haltestange (52) eine Magnetbefestigung (53) zur Befestigung an dem Blattanschluss (16) aufweist.

6. Verfahren nach einem der Ansprüche 3 bis 5, **dadurch gekennzeichnet, dass** die Kennzeichnungseinheit (50) einen an der Haltestange (52) angeordneten Linienlaser (54) aufweist, der eine Laserlinie (56) entlang der Rotorblattlängsachse (12) auf die Bodenplatte (18) projiziert.

7. Verfahren nach einem der Ansprüche 1 bis 6, **dadurch gekennzeichnet, dass** zum Montieren der Projektionseinrichtung (30) eine Durchgangsbohrung (44) in die Bodenplatte (18) an dem gekennzeichneten Schnittpunkt (40) gebohrt wird, wobei die Projektionseinrichtung (30) im Bereich der Durchgangsbohrung (44) an einer Innenseite (18") der Bodenplatte (18) angeordnet wird.

8. Verfahren nach einem der Ansprüche 1 bis 7, **dadurch gekennzeichnet, dass** zum Ausrichten der Projektionseinrichtung (30) die Rotorblattlängsachse (12) auf einer Innenfläche (62) des Rotorblatts (10) gekennzeichnet wird.

9. Verfahren nach Anspruch 8, **dadurch gekennzeichnet, dass** die Innenfläche (62) des Rotorblatts eine Stirnfläche (62) eines entlang der Rotorblattlängsachse (12) verlaufenden Stegs (60) ist.

10. Verfahren nach Anspruch 8 oder 9, **dadurch gekennzeichnet, dass** der Linienlaser (54) der Kennzeichnungseinheit (50) eine Laserlinie (58) entlang der Rotorblattlängsachse (12) durch die Durchgangsbohrung (44) der Bodenplatte (18) projiziert, um die Rotorblattlängsachse (12) auf der Innenfläche (62) des Rotorblatts (10) zu kennzeichnen.

11. Verfahren nach einem der Ansprüche 1 bis 10, **dadurch gekennzeichnet, dass** die zweite Laserfläche (35) und die dritte Laserfläche (36) im Wesentlichen senkrecht zueinander verlaufen.

12. Verfahren nach einem der Ansprüche1 bis 11, **dadurch gekennzeichnet, dass** die Projektionseinrichtung (30) ein Halteelement (38) aufweist, an dem der Kreuzlaser (34) und der Rotationslaser (32) im montierten Zustand der Projektionseinrichtung (30) entlang der Rotorblattlängsachse (12) versetzt zueinander angeordnet sind.

13. Verfahren nach einem der vorhergehenden Ansprüche, **dadurch gekennzeichnet, dass** die Projektionseinrichtung (30) im montierten Zustand um die Rotorblattlängsachse (12) winkelverstellbar ist.

## Claims

1. A method for projecting a marking within a rotor blade (10) of a wind turbine, wherein the rotor blade (10) has a rotor blade longitudinal axis (12), a rotor blade inner surface (14), a blade connection (16) for connecting to a rotor hub, and a floor plate (18) that is arranged basically perpendicular to the rotor blade longitudinal axis (12), **characterized by** the steps:
- identifying a point of intersection (40) of the rotor blade longitudinal axis (12) with the floor plate (18),
- mounting a projection apparatus (30) on the floor plate (18), and aligning the projection apparatus (30) relative to the rotor blade longitudinal axis (12),
- projecting a marking (42) on the rotor blade inner surface (14) using the projection apparatus (30), wherein
- the projection apparatus (30) comprises a rotating laser (32), wherein the rotating laser (32) produces a first laser area (33) that runs basically perpendicular to the rotor blade longitudinal axis (12), and wherein
- the projection apparatus (30) furthermore comprises a cross-hair laser (34), wherein the cross-hair laser (34) produces at least one second laser area (35) and one third laser area (36) that run parallel to the rotor blade longitudinal axis (12) and intersect the first laser area (33) of the rotating laser (32), wherein the points of intersection of the first laser area (33) with the second laser area (35), and the points of intersection of the first laser area (33) with the third laser area (36) form the projected markings (42).

2. The method according to claim 1, **characterized in that** an identifying unit (50) is used to identify the point of intersection (40) of the rotor blade longitudinal axis (12) with the floor plate (18) that is aligned relative to the blade connection (16).

3. The method according to claim 2, **characterized in that** the identifying unit (50) comprises a retaining rod (52) that extends over a radius or a diameter of the blade connection (16) and is fastened to the blade connection (16).

4. The method according to claim 3, **characterized in that** the retaining rod (52) is fastened to transverse holes (23), transverse bolts (22), longitudinal holes (21) or longitudinal bolts (20) of the blade connection (16).

5. The method according to claim 4, **characterized in that** the retaining rod (52) has a magnetic fastener (53) for fastening to the blade connection (16).

6. The method according to one of claims 3 to 5, **characterized in that** the identifying unit (50) has a line laser (54) arranged on the retaining rod (52) that projects a laser line (56) along the rotor blade longitudinal axis (12) on the floor plate (18).

7. The method according to one of claims 1 to 6, **characterized in that** in order to mount the projection apparatus (30), a through-hole (44) is drilled into the floor plate (18) at the identified point of intersection (40), wherein the projection apparatus (30) is arranged in the region of the through-hole (44) on an inner side (18") of the floor plate (18).

8. The method according to one of claims 1 to 7, **characterized in that** the rotor blade longitudinal axis (12) is marked on an inner surface (62) of the rotor blade (10) in order to align the projection apparatus (30).

9. The method according to claim 8, **characterized in that** the inner surface (62) of the rotor blade is a face (62) of a bar (60) running along the rotor blade longitudinal axis (12).

10. The method according to claim 8 or 9, **characterized in that** the line laser (54) of the identifying unit (50) projects a laser line (58) along the rotor blade longitudinal axis (12) through the through-hole (44) in the floor plate (18) in order to identify the rotor blade longitudinal axis (12) on the inner surface (62) of the rotor blade (10).

11. The method according to one of claims 1 to 10, **characterized in that** the second laser area (35) and the third laser area (36) run basically perpendicular to each other.

12. The method according to one of claims 1 to 11, **characterized in that** the projection apparatus (30) has a retaining element (38) on which the cross-hair laser (34) and the rotation laser (32) are arranged offset from each other along the rotor blade longitudinal axis (12) when the projection apparatus (30) is in a mounted state.

13. The method according to one of the preceding claims, **characterized in that** when in a mounted state, the projection apparatus (30) can be adjusted at an angle around the rotor blade longitudinal axis (12).

## Revendications

1. Procédé de projection d'un marquage à l'intérieur d'une pale de rotor (10) d'une éolienne, dans lequel la pale de rotor (10) présente un axe longitudinal de pale de rotor (12), une face intérieure de pale de rotor (14), un raccord de pale (16) à relier à un moyeu de rotor et une plaque de fond (18), qui est disposée sensiblement à la perpendiculaire de l'axe longitudinal de pale de rotor (12), **caractérisé par** les étapes suivantes :
- le repérage d'un point d'intersection (40) de l'axe longitudinal de pale de rotor (12) avec la plaque de fond (18),
- le montage d'un dispositif de projection (30) sur la plaque de fond (18) et l'alignement du dispositif de projection (30) par rapport à l'axe longitudinal de pale de rotor (12),
- la projection d'un marquage (42) sur la face intérieure de pale de rotor (14) avec le dispositif de projection (30), dans lequel
- le dispositif de projection (30) comprend un laser rotatif (32), sachant que le laser rotatif (32) génère une première surface laser (33), qui s'étend sensiblement à la perpendiculaire de l'axe longitudinal de pale de rotor (12), et dans lequel
- le dispositif de projection (30) comprend encore un laser croisé (34), sachant que le laser croisé (34) génère au moins une deuxième surface laser (35) et une troisième surface laser (36), qui s'étendent parallèlement à l'axe longitudinal de pale de rotor (12) et croisent la première surface laser (33) du laser rotatif (32), dans lequel les points de croisement de la première surface laser (33) avec la deuxième surface laser (35) et les points de croisement de la première surface laser (33) avec la troisième surface laser (36) forment les marquages projetés (42).

2. Procédé selon la revendication 1, **caractérisé en ce qu'**une unité de repérage (50) est utilisée pour repérer le point d'intersection (40) de l'axe longitudinal de pale de rotor (12) avec la plaque de fond (18), qui est alignée par rapport au raccord de pale (16).

3. Procédé selon la revendication 2, **caractérisé en ce que** l'unité de repérage (50) comprend une tige de support (52) s'étendant sur un rayon ou sur un diamètre du raccord de pale (16), qui est fixée au raccord de pale (16).

4. Procédé selon la revendication 3, **caractérisé en ce que** la tige de support (52) est fixée à des alésages transversaux (23), à des boulons transversaux (22), à des alésages longitudinaux (21) ou à des boulons longitudinaux (20) du raccord de pale (16).

5. Procédé selon la revendication 4, **caractérisé en ce que** la tige de support (52) présente une fixation magnétique (53) à fixer au raccord de pale (16).

6. Procédé selon l'une des revendications 3 à 5, **caractérisé en ce que** l'unité de repérage (50) présente un laser linéaire (54) disposé sur la tige de support (52), qui projette une ligne laser (56) le long de l'axe longitudinal de pale de rotor (12) sur la plaque de fond (18).

7. Procédé selon l'une des revendications 1 à 6, **caractérisé en ce qu'**un alésage traversant (44) est percé dans la plaque de fond (18) au point d'intersection repéré (40) pour monter le dispositif de projection (30), dans lequel le dispositif de projection (30) est disposé dans la zone de l'alésage traversant (44) sur un côté intérieur (18") de la plaque de fond (18).

8. Procédé selon l'une des revendications 1 à 7, **caractérisé en ce que** l'axe longitudinal de pale de rotor (12) est repéré sur une face intérieure (62) de la pale de rotor (10) pour aligner le dispositif de projection (30).

9. Procédé selon la revendication 8, **caractérisé en ce que** la face intérieure (62) de la pale de rotor est une face frontale (62) d'une nervure (60) s'étendant le long de l'axe longitudinal de pale de rotor (12).

10. Procédé selon la revendication 8 ou 9, **caractérisé en ce que** le laser linéaire (54) de l'unité de repérage (50) projette une ligne laser (58) le long de l'axe longitudinal de pale de rotor (12) à travers l'alésage traversant (44) de la plaque de fond (18) pour repérer l'axe longitudinal de pale de rotor (12) sur la face intérieure (62) de la pale de rotor (10).

11. Procédé selon l'une des revendications 1 à 10, **caractérisé en ce que** la deuxième surface laser (35) et la troisième surface laser (36) s'étendent sensiblement à la perpendiculaire l'une de l'autre.

12. Procédé selon l'une des revendications 1 à 11, **caractérisé en ce que** le dispositif de projection (30) présente un élément de support (38), sur lequel le laser croisé (34) et le laser rotatif (32) sont disposés à l'état monté du dispositif de projection (30) le long de l'axe longitudinal de pale de rotor (12) en étant décalés l'un par rapport à l'autre.

13. Procédé selon l'une des revendications précédentes, **caractérisé en ce que** le dispositif de projection (30) est orientable à l'état monté selon un angle variable autour de l'axe longitudinal de pale de rotor (12).
